# EUROPEAN PATENT APPLICATION

(11) **EP 4 601 058 A1**
(43) Date of publication of application: **13.08.2025**
(21) Application number: 24211390.0
(22) Date of filing: 07.11.2024
(51) Int. Cl.: H01M 10/04, H01M 10/0585, H01M 50/103, H01M 50/528, H01M 50/533, H01M 50/536, H01M 50/54, H01M 50/55, H01M 50/553

(54) **BATTERY CELL AND BATTERY DEVICE INCLUDING THE SAME**

(30) Priority: 06.02.2024 KR 20240018273
(71) Applicant: SK On Co., Ltd., Seoul 03161 (KR)
(72) Inventor: KWAK, Seung Ho, 34124 Daejeon (KR); CHEONG, Hoemin, 34124 Daejeon (KR); JU, Seung Hoon, 34124 Daejeon (KR)
(74) Representative: Bird & Bird LLP

(57) **Abstract**

A battery cell includes an electrode assembly in which a plurality of separators and a plurality of electrode plates including a plurality of electrode tabs are stacked in a first direction, a cell case accommodating the electrode assembly, a cap plate assembly covering an open end of the cell case and including an electrode terminal, and a current collector electrically connecting the plurality of electrode tabs and the electrode terminal. The plurality of electrode tabs include bent portions having a bend shape. The bent portions are arranged in a layered manner in the first direction. The current collector is welded to a plurality of the bent portions, while being disposed to face a second direction, intersecting the first direction.

## Description

### TECHNICAL FIELD

The disclosure and implementations disclosed in this patent document generally relate to a battery cell (a secondary battery cell) capable of being charged and discharged and a battery device including the same.

### BACKGROUND

Secondary batteries (battery cells) are receiving a lot of attention as power sources for various mobile devices, electric vehicles, and energy storage devices due to convenience thereof, in that they may be charged and discharged, unlike primary batteries.

Secondary batteries may be manufactured as pouch-type battery cells or can-type battery cells. A pouch-type battery cell has a structure in which an electrode assembly is accommodated inside a flexible pouch case. A can-type battery cell has a structure in which an electrode assembly is accommodated inside a rigid case and may be composed of a cylindrical battery cell or a prismatic battery cell.

### SUMMARY

The present disclosure may be implemented in some embodiments to provide a battery cell including an electrode assembly (also referred to as a jelly roll) and a cell case accommodating the electrode assembly. The electrode assembly may have a configuration in which a separator is disposed between electrode plates. The electrode plates include a portion on which an active material is applied and an uncoated portion on which the active material is not applied. The uncoated portion may function as an electrode tab. The electrode tabs provided on the plurality of electrode plates are welded to a current collector, and the current collector may be electrically connected to an electrode terminal disposed in the cell case.

To weld the plurality of electrode tabs to the current collector, a process is performed in which the ends of the plurality of electrode tabs or portions adjacent to the ends are gathered into one or in plural. However, during this process, the electrode assembly may be tilted to one side, resulting in poor alignment of the electrode assembly.

In addition, even in the case in which the ends of the electrode tabs gathered to one side are bent or curved to one side, the electrode assembly may be tilted, resulting in poor alignment of the electrode assembly.

In addition, in the process of bending the end of the electrode tab to one side, if a large amount of the electrode tab is exposed to the outside of the electrode assembly in the thickness direction, the current collector may also protrude to the outside of the electrode assembly in the thickness direction, which may reduce the energy density of the battery cell.

Meanwhile, a plurality of electrode tabs and a current collector may be welded by ultrasonic welding or laser welding. Laser welding may be performed by irradiating a laser beam to the current collector while the electrode tabs and the current collector are disposed. If there is a space between the electrode tabs when viewed in the direction of the laser beam irradiation, the laser beam may pass through the space between the electrode tabs and enter the inside of the electrode assembly. In this case, the electrode assembly may be damaged or deformed by the laser beam.

According to an aspect of the present disclosures, a battery cell and a battery device including the same may be provided, in which damage to an electrode assembly may be prevented or limited during a process of welding an electrode tab and a current collector.

According to an aspect of the present disclosure, a battery cell in which a biasing phenomenon of an electrode assembly may be reduced, and a battery device including the same, may be provided. In addition, according to an aspect of the present disclosure, a battery cell in which an aligned state of an electrode assembly may be stably maintained and a battery device including the same may be provided.

According to an aspect of the present disclosure, a battery cell capable of improving an energy density of a battery cell and a battery device including the same may be provided.

A battery cell of the present disclosure and a battery device including the same may be widely applied in green technology fields such as electric vehicles, battery charging stations, and other solar power generation and wind power generation using batteries. In addition, the battery cell of the present disclosure and the battery device including the same may be used in eco-friendly electric vehicles, hybrid vehicles, and the like to ameliorate the effects of climate change by reducing air pollution and greenhouse gas emissions.

In some embodiments of the present disclosure, a battery cell includes an electrode assembly in which a plurality of separators and a plurality of electrode plates including a plurality of electrode tabs are stacked in a first direction; a cell case accommodating the electrode assembly; a cap plate assembly covering an open end of the cell case and including an electrode terminal; and a current collector electrically connecting the plurality of electrode tabs and the electrode terminal. The plurality of electrode tabs include bent portions having a bend shape. The bent portions are arranged in a layered manner in the first direction. The current collector is welded to a plurality of the bent portions, while being disposed to face a second direction, intersecting the first direction.

The electrode assembly may be formed by arranging the plurality of electrode plates having the bent portions in the first direction.

The bent portions may have an overlapping shape when viewed in the second direction.

The bent portions may have a bent or folded shape in a zigzag shape.

The bent portions may have a shape of being bent or folded two or more times.

The bent portions may have a plurality of bent portions, and a sum of angles at which the plurality of portions are folded may be 180 degrees or more.

The bent portions may have a shape wound in one direction.

The bent portions may have a shape in which ends of the electrode tabs are wound at an angle of 270 degrees or more.

The second direction may be a direction, perpendicular to the first direction.

The electrode assembly may include a first portion on which an active material may be applied and a second portion on which the electrode tabs are disposed, and the electrode assembly may be configured such that a thickness of the first portion in the first direction is equal to or less than a maximum thickness of the second portion in the first direction.

A portion of the second portion, protruding further than a thickness of the first portion in the first direction, may be configured to be bent toward an inside of the electrode assembly.

The current collector may contact and be welded to the bent portions provided on respective electrode plates.

The current collector and the plurality of bent portions may be joined by laser welding.

A welding line formed on the current collector may be parallel to the first direction or has an incline of 30 degrees or less with respect to the first direction.

A width of the welding line in the first direction may be smaller than or equal to a width of the current collector in the first direction.

The second direction may be perpendicular to the first direction, the cell case may have a form open in a third direction, perpendicular to the first direction and the second direction, and the electrode tabs may be disposed on both ends of the electrode assembly in the second direction, respectively.

The cell case may have a form open in the second direction, and the electrode tabs may include a cathode tab and an anode tab disposed on one end of the electrode assembly in the second direction.

In some embodiments of the present disclosure, a battery cell includes an electrode assembly in which a plurality of electrode plates including a plurality of electrode tabs and a plurality of separators are stacked in a first direction; a cell case accommodating the electrode assembly; a cap plate assembly covering an open end of the cell case and including an electrode terminal; and a current collector electrically connecting the plurality of electrode tabs and the electrode terminal. The plurality of electrode tabs include bent portions having a bend shape. The plurality of electrode plates are arranged in layers in the first direction in a state in which the bent portions are formed.

In some embodiments of the present disclosure, a battery device includes a plurality of battery cells; and a housing accommodating the plurality of battery cells. Each of the plurality of battery cells includes an electrode assembly in which a plurality of electrode plates including a plurality of electrode tabs and a plurality of separators are stacked in a first direction; a cell case accommodating the electrode assembly; a cap plate assembly covering an open end of the cell case and including an electrode terminal; and a current collector electrically connecting the plurality of electrode tabs and the electrode terminal. The plurality of electrode tabs include bent portions having a bend shape, the bent portions are arranged in a layer in the first direction, and the current collector is welded to a plurality of the bent portions in a state in which the current collector is disposed to face a second direction, intersecting the first direction.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell according to an embodiment.
FIG. 2 is an exploded perspective view of the battery cell illustrated in FIG. 1.
FIG. 3 is a perspective view illustrating a state in which an electrode tab and a current collector are combined in the battery cell illustrated in FIG. 1.
FIG. 4 is a plan view illustrating an arrangement of an electrode tab and a current collector.
FIG. 5 is a plan view of an electrode tab according to an embodiment.
FIGS. 6A to 6F are schematic views sequentially illustrating a manufacturing process of a battery cell according to an embodiment.
FIG. 7 is a schematic view illustrating a state in which a portion of an electrode tab protruding externally is post-processed.
FIG. 8 is a plan view illustrating an arrangement of an electrode tab and a current collector according to another embodiment.
FIGS. 9A to 9E are schematic views sequentially illustrating a process for processing the electrode tab illustrated in FIG. 8.
FIG. 10 is a plan view illustrating an arrangement of an electrode tab and a current collector according to another embodiment.
FIGS. 11A to 11E are schematic diagrams sequentially illustrating a process for processing the electrode tab illustrated in FIG. 10.
FIG. 12 is a perspective view of a battery cell according to another embodiment.
FIG. 13 is a plan view of a battery device according to an embodiment.

### DETAILED DESCRIPTION

Features of the present disclosure disclosed in this patent document are described by example embodiments with reference to the accompanying drawings.

The same reference numbers or symbols described in each drawing attached to this specification represent parts or components that perform substantially the same functions. For the convenience of explanation and understanding, the same reference numbers or symbols may be used in different embodiments. In detail, even if components with the same reference numbers are depicted in multiple drawings, they do not mean that all of the multiple drawings represent an embodiment.

In the following description, the singular expression includes the plural expression unless the context clearly indicates otherwise. It should be understood that the terms such as "include" or "comprise" are intended to specify the presence of features, numbers, steps, operations, components, parts, or combinations thereof described in the specification, but do not preclude the possibility of the presence or addition of one or more other features, numbers, steps, operations, components, parts, or combinations thereof.

In addition, in the following description, the expressions such as "upper side," "upper portion," "lower side," "lower portion," "side," "side surface," "front," "rear," and the like are expressed based on the direction depicted in the drawings, and it is noted in advance that they may be expressed differently if the direction of the corresponding object changes.

In addition, terms including ordinal numbers such as "first," "second," and the like may be used in the present specification and claims to distinguish between components. These ordinal numbers are used to distinguish between identical or similar components, and the meaning of the terms should not be limited due to the use of these ordinals. For example, the components associated with these ordinals should not be limited in their order of use or arrangement, and the like by their numbers. If necessary, respective ordinal numbers may be used interchangeably.

Hereinafter, the present disclosure will be described in detail with reference to the attached drawings. However, this is merely an example, and the present disclosure is not limited to the specific embodiments described as examples.

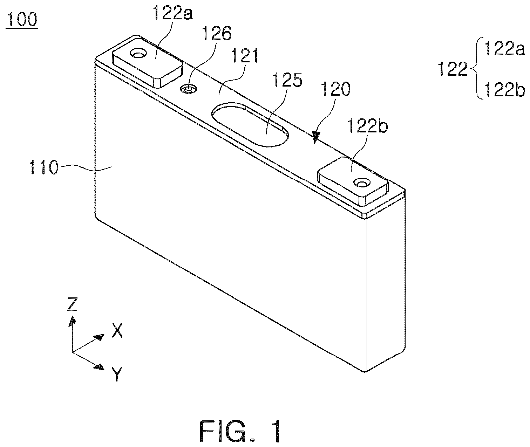

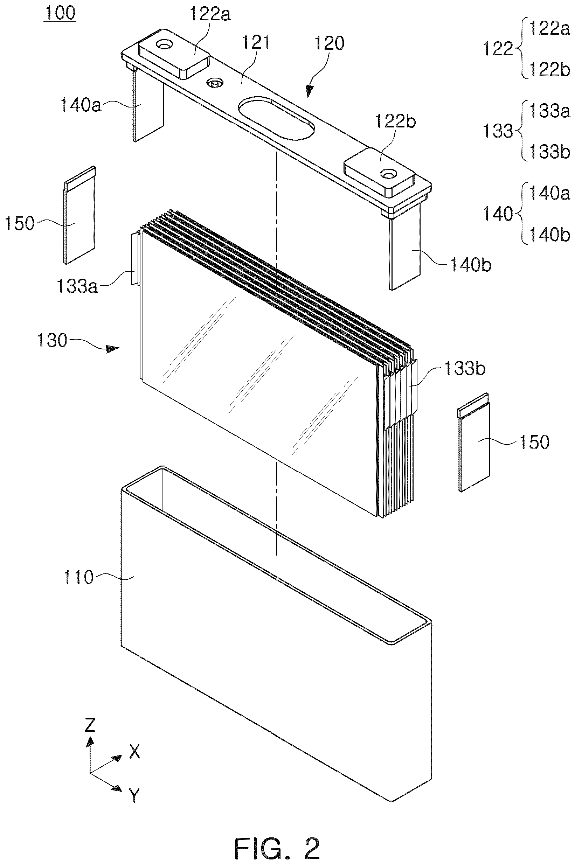

FIG. 1 is a perspective view of a battery cell 100 according to an embodiment, and FIG. 2 is an exploded perspective view of the battery cell 100 illustrated in FIG. 1.

Referring to FIG. 1 and FIG. 2, the battery cell 100 according to an embodiment may include a cell case 110, a cap plate assembly 120, an electrode assembly 130, and a current collector 140. The battery cell 100 illustrated in FIG. 1 and FIG. 2 illustrates a prismatic battery cell having a hexahedral shape, but the shape of the battery cell 100 of the present disclosure is not limited thereto.

The cell case 110 may have an opening shape with an accommodation space formed therein and one end open. The cell case 110 may have one end (for example, the upper side) open in the third direction (Z). The electrode assembly 130 may be accommodated in the accommodating space of the cell case 110. The electrode assembly 130 may be accommodated in the cell case 110 through an open end of the cell case 110.

The cell case 110 may have a flat and angular hexahedron shape, but the shape is not limited thereto. The cell case 110 may be formed of aluminum or a material including aluminum, but the material of the cell case 110 is not limited thereto.

The cap plate assembly 120 may cover the open end of the cell case 110. The cap plate assembly 120 may include a cap plate 121 and an electrode terminal 122. The cap plate 121 may cover the open end of the cell case 110. The cap plate 121 may be combined with the cell case 110 to form a space in which the electrode assembly 130 is accommodated. The cap plate 121 may be formed of aluminum or a material including aluminum, but the material of the cap plate 121 is not limited thereto.

The electrode terminal 122 may be disposed on the cap plate 121. The electrode terminal 122 may be electrically connected to the electrode plate 131. The electrode terminal 122 may include a cathode terminal 122a electrically connected to the cathode plate 131a and an anode terminal 122b electrically connected to the anode plate 131b.

A vent 125 may be disposed on at least one of the cell case 110 and the cap plate assembly 120. As an example, the vent 125 may be installed in the cap plate 121. The vent 125 may be fixed to the cap plate 121 by laser welding or the like. The vent 125 may be configured to discharge gas, or the like generated in the receiving space of the cell case 110. For example, the vent 125 may be configured to be ruptured when the internal pressure of the cell case 110 increases due to gas, or the like. The installation location and number of the vents 125 may be variously changed. For example, the vent 125 may also be installed in the cell case 110.

The cap plate assembly 120 may include an injection hole plug 126 that closes the electrolyte injection port after injecting the electrolyte into the internal space of the cell case 110. The electrolyte injection port and the injection hole plug 126 may be installed in the cap plate 121.

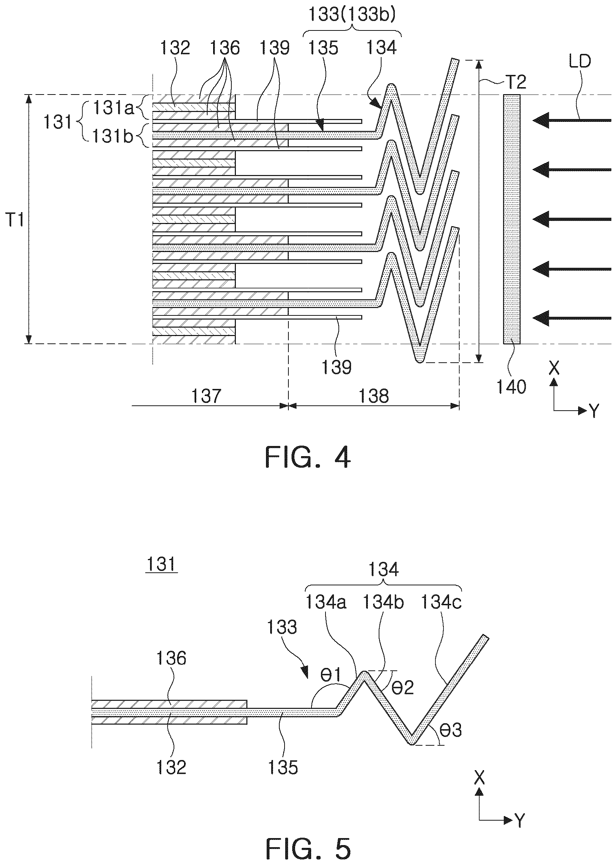

Referring to FIGS. 1 and 2 together with FIG. 4, the electrode assembly 130 may include a plurality of electrode plates 131 and a plurality of separators 139. The electrode plates 131 may include a cathode plate 131a and an anode plate 131b. The separator 139 may be configured as an insulator interposed between the cathode plate 131a and the anode plate 131b. The electrode assembly 130 may be configured in a stack type in which the cathode plates 131a and the anode plates 131b are alternately stacked with the separator 139 interposed therebetween. As an example, the cathode plates 131a, the separator 139, and the anode plates 131b may be stacked in a first direction (X). Hereinafter, in the present specification and claims, the first direction (X) is defined as the direction in which the cathode plate 131a, the separator 139, and the anode plate 131b are stacked.

In contrast, the electrode assembly 130 may be configured as a jelly roll type in which the anode plate 131b, the separator 139, and the cathode plate 131a are stacked and rolled together. However, the method of configuring the electrode assembly 130 is not limited thereto and various changes are possible.

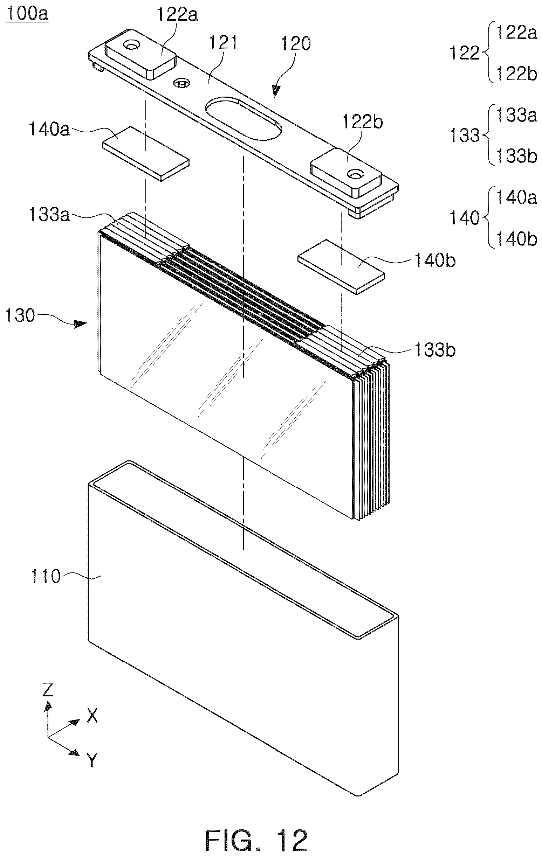

The electrode plate 131 may include an electrode tab 133. The electrode tab 133 may have a shape extending from the electrode plate 131. The electrode tab 133 may include a cathode tab 133a provided on the cathode plate 131a and an anode tab 133b provided on the anode plate 131b. The electrode tabs 133 may be disposed on both ends of the electrode assembly 130 in the second direction (Y), respectively. As an example, the cathode tab 133a may be disposed at one end of the electrode assembly 130 in the second direction (Y), and the anode tab 133b may be disposed at the other end of the electrode assembly 130 in the second direction (Y). However, the arrangement position of the electrode tabs 133 is not limited thereto. For example, the electrode tabs 133 may also be disposed at one end of the electrode assembly 130 as illustrated in FIG. 12.

The current collector 140 may electrically connect a plurality of electrode tabs 133 and the electrode terminal 122. The current collector 140 may include a cathode current collector 140a electrically connected to the cathode tab 133a and an anode current collector 140b electrically connected to the anode tab 133b. The cathode current collector 140a may electrically connect the cathode tab 133a and the cathode terminal 122a, and the anode current collector 140b may electrically connect the anode tab 133b and the anode terminal 122b. The current collector 140 may be joined to the electrode terminal 122 and the electrode tab 133 by a known joining method, such as welding. The connection between the current collector 140 and the electrode terminal 122 may be accomplished by using laser welding, ultrasonic welding, screw coupling, bolt coupling, riveting coupling, or fitting coupling, but the connection method is not limited thereto.

When the cell case 110 has a form open in the third direction (Z) perpendicular to the first direction (X) and the second direction (Y), and the electrode tabs 133 are disposed on both ends of the electrode assembly 130 in the second direction (Y), respectively, the current collector 140 may be electrically connected to the electrode tabs 133 facing in the second direction (Y) and electrically connected to the electrode terminals 122 facing in the third direction (Z). In this case, the current collector 140 may have a shape folded in an 'L' shape.

The battery cell 100 may include an insulating member 150 for electrical insulation from external components. The insulating member 150 may be placed between the current collector 140 and the inner surface of the cell case 110 to electrically insulate between the current collector 140 and the cell case 110.

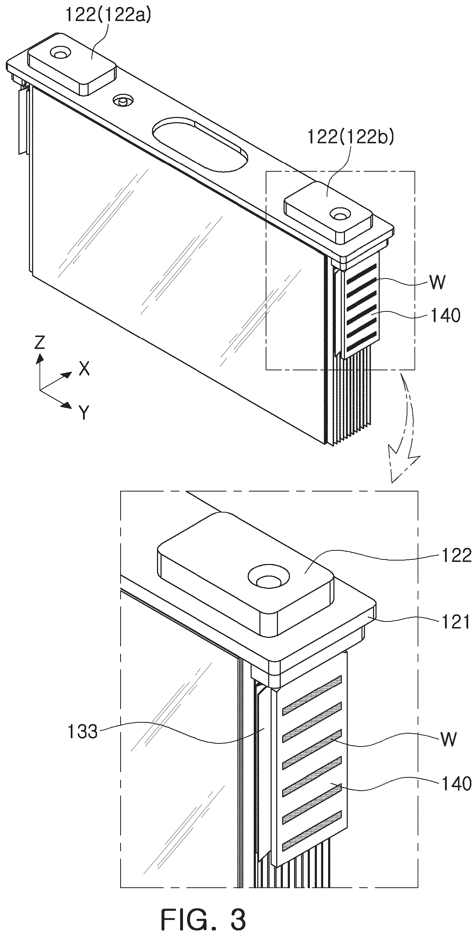

FIG. 3 is a perspective view illustrating a state in which an electrode tab 133 and a current collector 140 are combined in the battery cell 100 illustrated in FIG. 1 and FIG. 2.

The current collector 140 may be combined with the electrode assembly 130 by welding. The current collector 140 may be welded to the electrode tab 133 while being disposed to face the electrode tab 133. The current collector 140 may be welded to a plurality of electrode tabs 133 while being disposed to face the second direction (Y). The first direction (X) is the direction in which the electrode plates 131 are layered, and the second direction (Y) may be defined as the direction intersecting the first direction (X). The second direction (Y) may be defined as a direction in which the current collector 140 faces the plurality of electrode tabs 133. For example, the second direction (Y) may be a direction perpendicular to the first direction (X).

The electrode tabs 133 are disposed on both ends of the electrode assembly 130 in the second direction (Y), respectively, and the current collector 140 may be disposed so as to face the second direction (Y) and may be welded to the electrode tabs 133 while facing the electrode tabs 133. The current collector 140 and the electrode tabs 133 may be joined by laser welding, but are not limited thereto. For example, the current collector 140 and the electrode tabs 133 may also be joined by other welding methods such as ultrasonic welding.

The welding line (W) formed on the current collector 140 may be parallel to the first direction (X) or may be inclined at a predetermined angle or less with respect to the first direction (X). For example, the welding line (W) may be formed parallel to the first direction (X) or may have an incline of 30 degrees or less with respect to the first direction (X). The width of the welding line (W) in the first direction (X) may be smaller than or equal to the width of the current collector 140 in the first direction (X). The width of the current collector 140 in the first direction (X) may have a size corresponding to the width of the electrode tab 133 in the first direction (X).

FIG. 4 is a plan view illustrating the arrangement of the electrode tab 133 and the current collector 140.

The electrode assembly 130 may have a shape in which a plurality of electrode plates 131 and a plurality of separators 139 are stacked in the first direction (X). For example, the electrode assembly 130 may have a cathode plate 131a and an anode plate 131b alternately stacked with the separator 139 in between.

The electrode plate 131 may have a structure in which an active material 136 is coated on a foil 132. The cathode plate 131a may have a cathode active material coated on the foil 132, and the anode plate 131b may have an anode active material coated on the foil 132. For example, the anode plate 131b may be formed by coating graphite or the like on a copper or nickel material foil, and the cathode plate 131a may be formed by coating a transition metal oxide active material on an aluminum material foil.

The electrode plate 131 may include an electrode tab 133. The electrode tab 133 may include an uncoated (non-coated) portion on which the active material 136 is not applied. The cathode tab 133a of FIG. 2 may be provided on the cathode plate 131a, and the anode tab 133b may be provided on the anode plate 131b. Hereinafter, an example will be described in which the electrode tab 133 is an anode tab 133b, but the description below may also be applied to the cathode tab 133a.

A plurality of electrode tabs 133 may include a flat portion 135 extending from an electrode plate 131 and a bent portion 134 connected to the flat portion 135 and having a bent shape. In the electrode assembly 130, the respective bent portions 134 may be arranged in layers in the first direction (X).

The electrode assembly 130 may be formed by arranging a plurality of electrode plates 131 on which bent portions 134 are formed in the first direction (X). For example, the electrode assembly 130 may have a structure in which an electrode plate 131 with a bent portion 134 formed and a separator 139 are stacked in a first direction (X).

A plurality of electrode plates 131 may be arranged in layers in a first direction (X) in a state in which the bent portion 134 are formed.

The bent portion 134 may have a bent or folded shape in a zigzag shape. The bent portion 134 may have a form of being bent or folded in a zigzag shape. The bent portion 134 may have a shape (form) that is bent or folded two or more times. In another embodiment, the bent portion 134 may have a shape that is wound in one direction.

The current collector 140 may be welded to a plurality of bent portions 134 in a state in which it is disposed to face a second direction (Y) that intersects the first direction (X). The current collector 140 may be welded while in contact with the bent portion 134 provided on each of the plurality of electrode plates 131.

The bent portion 134 may have an overlapping shape when viewed in the second direction (Y). The area where the bent portion 134 has an overlapping shape when viewed in the second direction (Y) may be 90% or more of the thickness of the electrode assembly 130 in the first direction (X). For example, the area where the bent portion 134 has an overlapping shape may be 92% or more, 95% or more, 97% or more, 99% or more of the thickness of the electrode assembly 130 in the first direction (X), and may also exceed 100%. For example, the range in which the bent portion 134 has an overlapping shape may include a case in which the thickness of the first direction (X) of the electrode assembly 130 is slightly smaller.

The electrode assembly 130 may include a first portion 137 on which the active material 136 is applied and a second portion 138 on which the electrode tab 133 is disposed. The electrode assembly 130 may be configured such that the thickness T1 of the first portion 137 in the first direction (X) is equal to or smaller than the maximum thickness T2 of the second portion 138 in the first direction (X). For example, since the bent portion 134 is disposed on the electrode tab 133, a portion of the outer bent portion 134 may protrude outwardly more than the thickness of the electrode assembly 130. For example, among the second portions 138 where the electrode tabs 133 are disposed, some may have a shape that protrudes more than the thickness of the first portion 137 in the first direction (X).

The current collector 140 may be welded while facing and in contact with the bent portion 134 of the electrode tab 133. The current collector 140 may contact and be welded to the bent portions 134 provided on respective electrode plates 131. The current collector 140 and the electrode tab 133 may be joined by laser welding. Laser welding is a noncontact welding method that irradiates a laser beam, and has the advantage of not generating burrs or fluff. In addition, laser welding utilizes a high-density heat source and may conduct heat only to a local section to be welded.

The current collector 140 and the electrode tab 133 may be welded by irradiating a laser beam to the current collector 140 while the current collector 140 and the electrode tab 133 are disposed facing each other in the second direction (Y).

Since the bent portion 134 of the electrode tab 133 has an overlapping shape when viewed in the second direction (Y), the bent portion 134 may also have an overlapping shape in the irradiation direction (LD) of the laser beam. The bent portion 134 of the overlapping shape may block or limit the penetration of the laser beam into the first portion 137 of the electrode assembly 130. Therefore, according to the embodiment, damage to the electrode assembly 130 may be prevented or limited during the process of welding the electrode tab 133 and the current collector 140.

In addition, to limit the penetration of the laser beam into the first portion 137 of the electrode assembly 130, the welding line (W) formed on the current collector 140 may be parallel to the first direction (X) or may be inclined at 30 degrees or less with respect to the first direction (X). Since the end of the bent portion 134 has a shape that extends along the third direction (Z), if a welding line (W) is formed in the first direction (X) or a similar direction perpendicular to the third direction (Z), the laser beam may be restricted from moving toward the inside of the electrode assembly 130. However, the direction of the welding line (W) is not limited to the first direction (X) or a similar direction.

In addition, according to the embodiment, since the bent portion 134 is arranged in layers, the phenomenon of the electrode assembly 130 being tilted may be reduced, and accordingly, the electrode assembly 130 may be stably maintained in an aligned state.

FIG. 5 is a plan view of an electrode tab 133 according to an embodiment.

The electrode plate 131 may include a portion in which an active material 136 is applied to a foil 132 and an electrode tab 133. The electrode tab 133 may include a portion in which the active material 136 is not applied. The electrode tab 133 may include a flat portion 135 extended from the electrode plate 131 and a bent portion 134 having a bend shape. The bent portion 134 may have a shape that is bent or folded in a zigzag shape. The bent portion 134 may have a shape that is bent or folded two or more times. For example, the bent portion 134 may have a three-bend shape as illustrated in FIG. 5, but the number of times it is bent or folded may vary.

The bent portion 134 may include a plurality of bent portions. Referring to FIG. 5, the bent portion 134 may include a first part 134a bent from the flat portion 135 at a first angle θ1, a second part 134b bent from the first part 134a at a second angle θ2, and a third part 134c bent from the second part 134b at a third angle θ3. The folded angle is based on the second direction (Y) and is an angle when no external force is applied. At this time, the sum of the angles at which the plurality of parts are bent may be 180 degrees or more.

The lengths of the first part 134a, the second part 134b, and the third part 134c may have different values. For example, the lengths of the first part 134a, the second part 134b, and the third part 134c may be configured to gradually increase. In this case, not only may the plurality of bent portions 134 be easily arranged in the first direction (X), but also the laser beam may be smoothly blocked from moving inwardly of the electrode assembly 130.

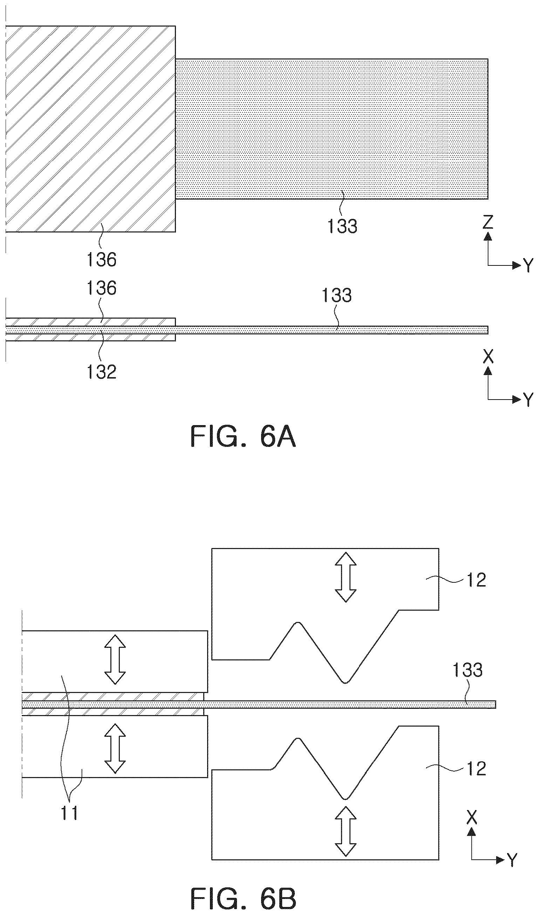

FIGS. 6A to 6F are schematic diagrams sequentially illustrating a manufacturing process of a battery cell 100 according to an embodiment.

First, FIGS. 6A to 6C illustrate a step of preparing an electrode plate 131. FIG. 6A illustrates an electrode plate 131 to which an active material 136 is applied, and the upper drawing in FIG. 6A illustrates a plane, and the lower drawing illustrates a side view. The electrode tab 133 is in a shape before the bent portion 134 is formed.

FIG. 6B illustrates a process of forming a bent portion 134 on the electrode tab 133. While one side of the electrode plate 131 is pressed by a jig 11, the electrode tab 133 portion is pressed through a molding machine 12. Since the molding machine 12 has a shape corresponding to the bent portion 134, the bent portion 134 may be formed in the electrode tab 133 through processing of the molding machine 12.

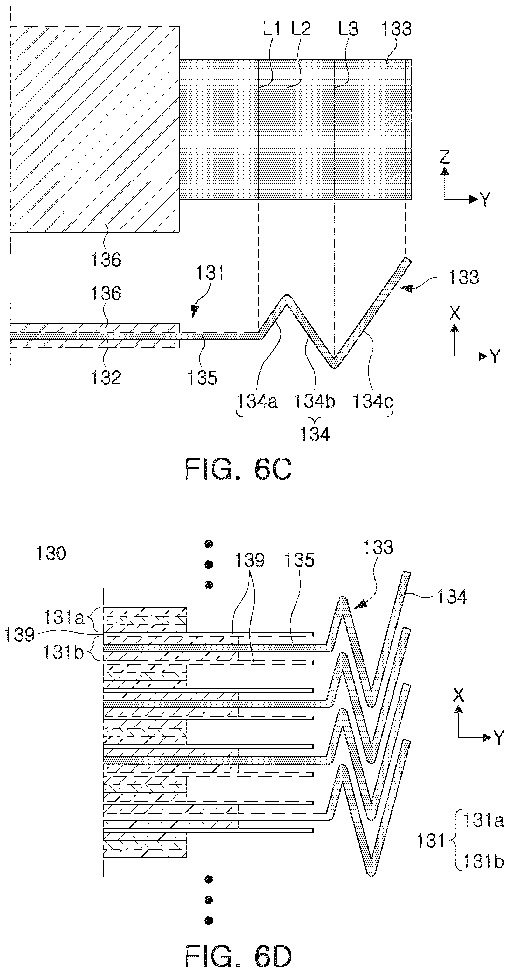

FIG. 6C illustrates an electrode plate 131 on which a bent portion 134 is formed, and the upper drawing in FIG. 6c illustrates a plane, and the lower drawing illustrates a side view. The electrode tab 133 includes a flat portion 135 and a bent portion 134, and the bent portion 134 may be folded into a plurality of portions (parts) 134a, 134b and 134c. In the plan view, L1, L2, and L3 indicate the bending lines.

Next, as illustrated in FIG. 6D, a plurality of electrode plates 131 having a bent portion 134 formed thereon may be arranged in a first direction (X) to form an electrode assembly 130. The electrode assembly 130 may have a structure in which a cathode plate 131a and an anode plate 131b are stacked in the first direction (X) with a separator 139 interposed therebetween.

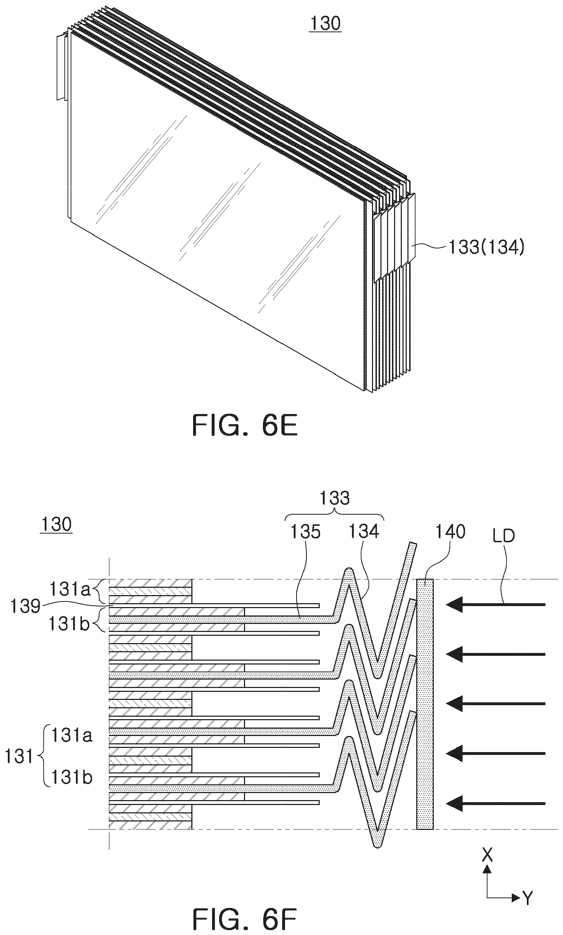

FIG. 6E illustrates an electrode assembly 130 in a state in which stacking is complete. The electrode assembly 130 may have a state in which the bent portion 134 of the electrode tab 133 is disposed on both sides.

As illustrated in FIG. 6F, the laser beam may be irradiated to the current collector 140 in a state in which the current collector 140 is in contact with the bent portion 134 of the electrode tab 133. To contact the current collector 140 and the bent portion 134, the current collector 140 may be pressed toward the bent portion 134. In the irradiation direction (LD) of the laser beam or in the second direction (Y) in which the current collector 140 faces the electrode tab 133, the bent portion 134 of the electrode tab 133 may have an overlapping shape. The overlapping bend 134 may prevent the laser beam from affecting the inside of the electrode assembly 130.

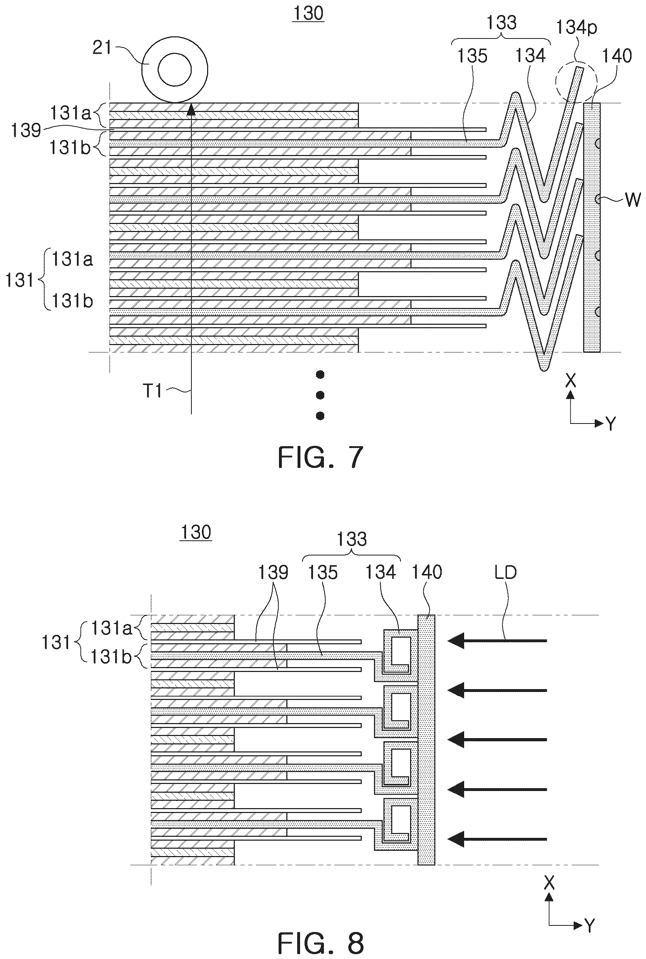

FIG. 7 is a schematic diagram illustrating a state of post-processing a portion of an electrode tab 133 that protrudes outwardly.

Referring to FIG. 7 together with FIG. 4, when a bent portion 134 is disposed on an electrode tab 133, some of the outer bent portions 134 may form a protrusion 134p that protrudes outwardly more than the thickness T1 of the electrode assembly 130 in the first direction (X). For example, some of the second portions 138 where the electrode tab 133 is disposed may have a shape that protrudes more than the thickness of the first portion 137 on which the active material 136 is applied in the first direction (X).

If the protrusion amount of the protrusion 134p is small (for example, less than 0.5 mm), the electrode assembly 130 may maintain the state in which the bent portion 134 protrudes. In contrast, when the protrusion amount of the protrusion 134p is large (for example, 0.5 mm or more), post-processing may be performed on the protrusion 134p. The protrusion 134p may be configured to be bent toward the inside of the electrode assembly 130 through post-processing using a roller 21 or the like. That is, a portion of the second portion 138, protruding further than a thickness of the first portion 137 in the first direction (X), may be configured to be bent toward an inside of the electrode assembly 130. As an example, the post-processing may include a process of pressing the protrusion 134p while moving the roller 21 toward the protrusion 134p (for example, toward the outside). The protrusion amount of the protrusion 134p may be reduced through post-processing.

FIG. 8 is a plan view illustrating the arrangement of the electrode tab 133 and the current collector 140 according to another embodiment.

FIG. 8 illustrates another embodiment of the bent portion 134 formed on the electrode tab 133. The bend portion 134 of the electrode tab 133 may have a shape that is wound in one direction. The shape of the bend portion 134 may include a quadrangle. The bend portion 134 may have a shape in which the end of the electrode tab 133 is wound at an angle of 270 degrees or more. For example, the bend portion 134 may have a shape that is wound by 360 degrees or more. The electrode assembly 130 may be formed by stacking electrode tabs 133 having bend portions 134 that are wound in one direction.

Even when the bend portion 134 of the electrode tab 133 has a wound shape, the bend portion 134 may have an overlapping shape when viewed in the second direction (Y). In addition, the bent portion 134 of the wound shape may also have an overlapping shape in the irradiation direction (LD) of the laser beam. Therefore, the bent portion 134 of the overlapping shape may block or limit the penetration of the laser beam into the inner portion of the electrode assembly 130.

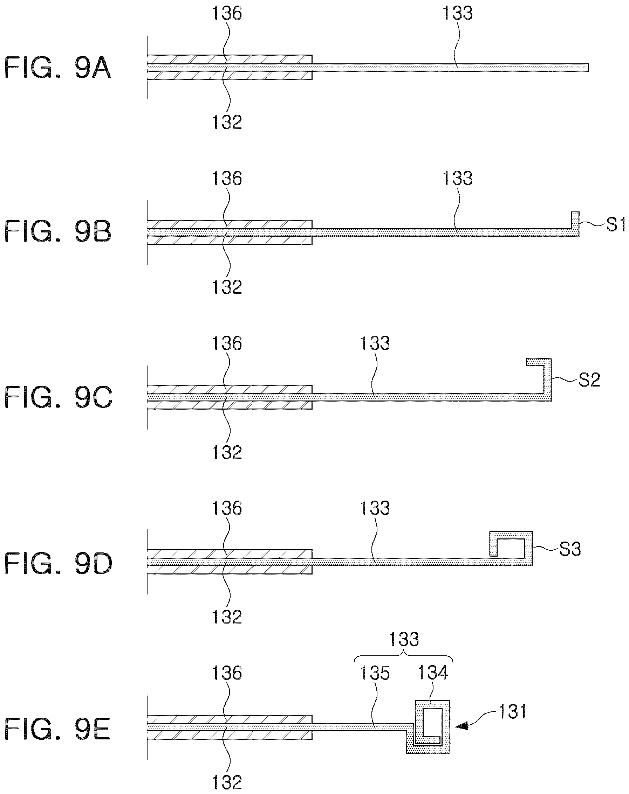

FIGS. 9A to 9E are schematic diagrams sequentially illustrating a process of processing the electrode tab 133 illustrated in FIG. 8.

FIG. 9A illustrates an electrode plate 131 to which an active material 136 is applied, and in FIG. 9A, the electrode tab 133 illustrates a shape before the bent portion 134 is formed.

As illustrated in FIGS. 9B to 9D, the end portion of the electrode tab 133 may be sequentially processed into a first shape S1, a second shape S2, and a third shape S3 by a mold.

Finally, the bent portion 134 of the electrode tab 133 may have a shape as illustrated in FIG. 9E. When the electrode plate 131 as illustrated in FIG. 9E is stacked, the electrode assembly 130 as illustrated in FIG. 8 may be formed.

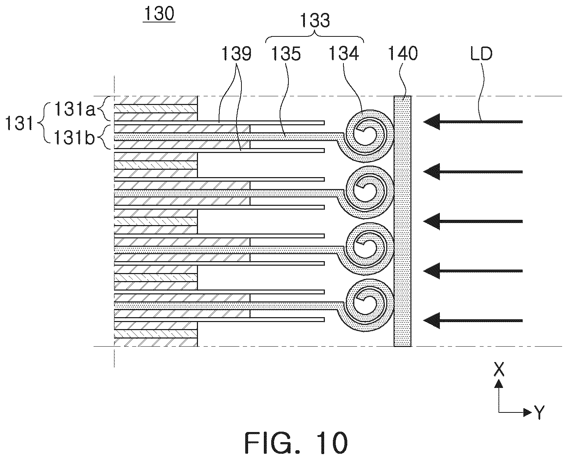

FIG. 10 is a plan view illustrating the arrangement of an electrode tab 133 and a current collector 140 according to another embodiment.

FIG. 10 illustrates another embodiment of a bent portion 134 formed on an electrode tab 133. The bent portion 134 of the electrode tab 133 may have a shape that is wound in one direction. The shape of the bent portion 134 may include a circle. The bent portion 134 may have a shape in which the end of the electrode tab 133 is wound by 270 degrees or more. For example, the bent portion 134 may have a shape that is wound by 360 degrees or more. The electrode assembly 130 may be formed by stacking electrode tabs 133 having a bent portion 134 that is wound in one direction.

Even when the bent portion 134 of the electrode tab 133 has a rolled shape, the bent portion 134 may have an overlapping shape when viewed in the second direction (Y). In addition, the bent portion 134 of the rolled shape may also have an overlapping shape in the irradiation direction (LD) of the laser beam. Therefore, the bent portion 134 of the overlapping shape may block or limit the laser beam from penetrating into the inner portion of the electrode assembly 130.

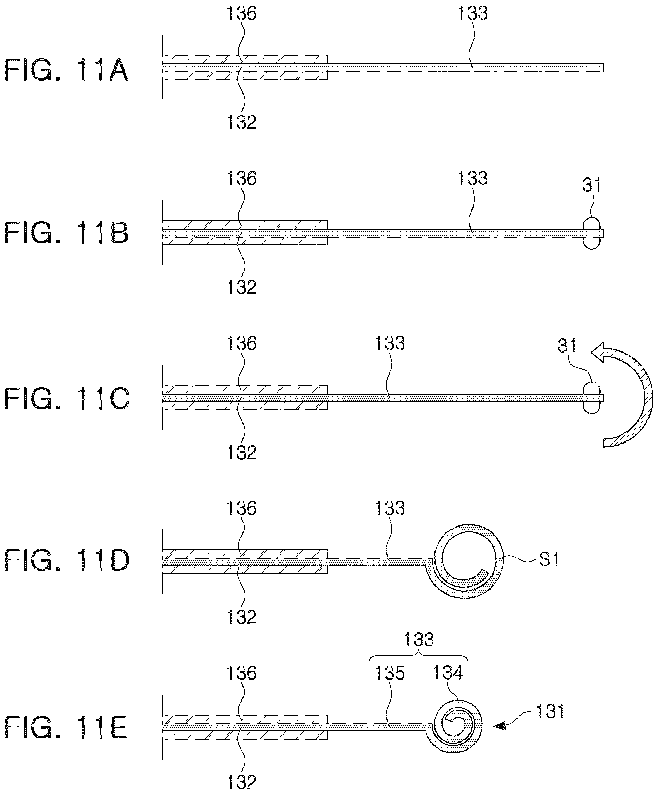

FIGS. 11A to 11E are schematic diagrams sequentially illustrating the process of processing the electrode tab 133 illustrated in FIG. 10.

FIG. 11A illustrates an electrode plate 131 to which an active material 136 is applied, and in (a) of FIG. 11, the electrode tab 133 is illustrated in a shape before the bent portion 134 is formed.

As illustrated in FIG. 11B, a mandrel or other rotary forming device 31 may be installed at the end of the electrode tab 133 to form a circularly wound bent portion 134. As illustrated in (c) of FIG. 11, when the rotary forming device 31 is rotated, the first shape S1 illustrated in FIG. 11D may be formed. If the rotational molding device 31 is additionally rotated, the bent portion 134 of the electrode tab 133 may have a shape as illustrated in FIG. 11E. If the electrode plates 131 as illustrated in FIG. 11E are stacked, the electrode assembly 130 as illustrated in FIG. 10 may be formed.

FIG. 12 is a perspective view of a battery cell 100 according to another embodiment.

A battery cell 100a as illustrated in FIG. 12 may include a cell case 110, a cap plate assembly 120, an electrode assembly 130, and a current collector 140.

The battery cell 100a illustrated in FIG. 12 differs from the battery cell 100 illustrated in FIGS. 1 to 3 in that the electrode tab 133 is disposed on the upper surface of the electrode assembly 130 and the current collector 140 is coupled to the electrode tab 133 on the upper surface of the electrode assembly 130.

As in the embodiment of FIG. 3, in the embodiment of FIG. 12, the first direction (X) may be defined as a direction in which the electrode plates 131 form layers, and the second direction (Z) may be defined as a direction in which the current collector 140 faces the plurality of electrode tab 133.

The electrode assembly 130 may have electrode plates 131 arranged in the first direction (X), and the electrode tab 133 may include a cathode tab 133a and an anode tab 133b disposed on one end of the electrode assembly 130 in the second direction (Z). In the embodiment illustrated in FIG. 12, the cell case 110 may have a shape in which one side (upper side) in the second direction (Z) is open.

The current collector 140 may electrically connect a plurality of electrode tabs 133 and electrode terminals 122. The current collector 140 may include a cathode current collector 140a electrically connected to a cathode tab 133a and an anode current collector 140b electrically connected to an anode tab 133b.

When the cell case 110 has a shape in which one side of the second direction (Z) is open, and the electrode tab 133 is disposed at one end of the electrode assembly 130 in the second direction (Z), the current collector 140 may be disposed between the electrode terminal 122 and the electrode tab 133 in the second direction (Z). The cell case 110 may have a form open in the second direction (Z), and the electrode tabs 133 includes a cathode tab and an anode tab disposed on one end of the electrode assembly 130 in the second direction (Z).

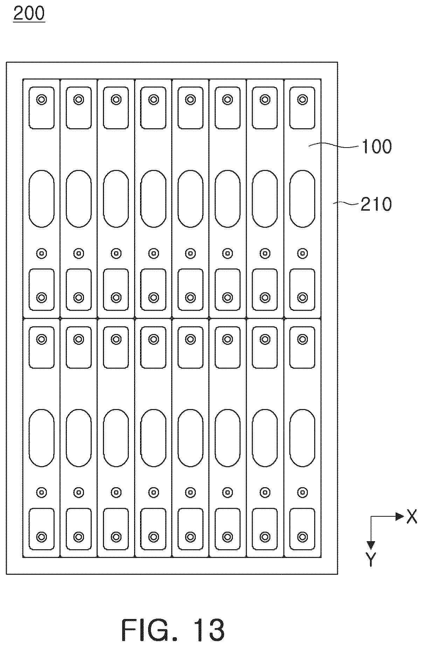

FIG. 13 is a plan view of a battery device according to an embodiment.

A battery device 200 according to an embodiment may include a plurality of battery cells 100 and a housing 210. The housing may include an internal space that accommodates a plurality of battery cells 100. The battery cell 100 may include battery cells 100 and 100a described with reference to FIGS. 1 to 12.

A battery device 200 may include a battery module or a battery pack including a plurality of battery cells 100.

Although this disclosure has been described by exemplifying a prismatic battery cell, the battery cell of this disclosure may be applied to pouch-type cells, cylindrical cells, coin-type cells, and the like.

As set forth above, according to an embodiment, damage to an electrode assembly may be prevented or limited during a process of welding an electrode tab and a current collector.

According to an embodiment, since bent portions are arranged in layers, a phenomenon of the electrode assembly being tilted may be reduced, and thus, the electrode assembly may be stably maintained in an aligned state.

According to an embodiment, since the bent portions may limit the size of the electrode assembly protruding outwardly in a thickness direction, an energy density of a battery cell may be improved.

Only specific examples of implementations of certain embodiments are described. Variations, improvements and enhancements of the disclosed embodiments and other embodiments may be made based on the disclosure of this patent document. For example, it may be implemented by deleting some components in the above-described embodiments, and each of the embodiments and modified examples may be implemented in combination with each other.

## Claims

1. A battery cell comprising:
an electrode assembly in which a plurality of separators and a plurality of electrode plates including a plurality of electrode tabs are stacked in a first direction;
a cell case accommodating the electrode assembly;
a cap plate assembly covering an open end of the cell case and including an electrode terminal; and
a current collector electrically connecting the plurality of electrode tabs and the electrode terminal,
wherein the plurality of electrode tabs include bent portions having a bend shape,
the bent portions are respectively arranged in a layered manner in the first direction, and
the current collector is welded to a plurality of the bent portions, while being disposed to face a second direction, intersecting the first direction.

2. The battery cell of claim 1, wherein the electrode assembly is formed by arranging the plurality of electrode plates having the bent portions in the first direction.

3. The battery cell of claim 1 or claim 2, wherein the bent portions have an overlapping shape when viewed in the second direction.

4. The battery cell of any one of claims 1 to 3, wherein the bent portions have a bent or folded shape in a zigzag shape.

5. The battery cell of claim 4, wherein the bent portions have a shape of being bent or folded two or more times.

6. The battery cell of claim 4, wherein the bent portions have a plurality of bent portions,
wherein a sum of angles at which the plurality of portions are folded is 180 degrees or more.

7. The battery cell of any one of claims 1 to 3, wherein the bent portions have a shape wound in one direction.

8. The battery cell of claim 7, wherein the bent portions have a shape in which ends of the electrode tabs are wound at an angle of 270 degrees or more.

9. The battery cell of any one of claims 1 to 8, wherein the electrode assembly includes a first portion on which an active material is applied and a second portion on which the electrode tabs are disposed,
wherein the electrode assembly is configured such that a thickness of the first portion in the first direction is equal to or less than a maximum thickness of the second portion in the first direction.

10. The battery cell of any one of claims 1 to 9, wherein the electrode assembly includes a first portion on which an active material is applied and a second portion on which the electrode tabs are disposed,
wherein a portion of the second portion, protruding further than a thickness of the first portion in the first direction, is configured to be bent toward an inside of the electrode assembly.

11. The battery cell of any one of claims 1 to 10,
wherein the current collector contacts and is welded to the bent portions provided on respective electrode plates, or
wherein the current collector and the plurality of bent portions are joined by laser welding.

12. The battery cell of claim 11, wherein a welding line formed on the current collector is parallel to the first direction or has an incline of 30 degrees or less with respect to the first direction.

13. The battery cell of any one of claims 1 to 12, wherein the second direction is perpendicular to the first direction,
the cell case has a form open in a third direction, perpendicular to the first direction and the second direction, and
the electrode tabs are disposed on both ends of the electrode assembly in the second direction, respectively.

14. The battery cell of any one of claims 1 to 12, wherein the second direction is perpendicular to the first direction,
the cell case has a form open in the second direction, and
the electrode tabs include a cathode tab and an anode tab disposed on one end of the electrode assembly in the second direction.

15. A battery device comprising:
a plurality of battery cells; and
a housing accommodating the plurality of battery cells,
wherein each of the plurality of battery cells includes,
an electrode assembly in which a plurality of electrode plates including a plurality of electrode tabs and a plurality of separators are stacked in a first direction;
a cell case accommodating the electrode assembly;
a cap plate assembly covering an open end of the cell case and including an electrode terminal; and
a current collector electrically connecting the plurality of electrode tabs and the electrode terminal,
wherein the plurality of electrode tabs include bent portions having a bend shape,
the bent portions are arranged in layers in the first direction, and
the current collector is welded to a plurality of the bent portions in a state in which the current collector is disposed to face a second direction, intersecting the first direction.
